**Europäisches Patentamt**

**European Patent Office**

**Office européen des brevets**

(19)

(11) Numéro de publication: **0 151 069**
**B1**

# FASCICULE DE BREVET EUROPÉEN

(12)

(45) Date de publication du fascicule du brevet:
**10.06.87**

(21) Numéro de dépôt: **85400108.8**

(22) Date de dépôt: **23.01.85**

(51) Int. Cl.⁴: **B 60 T 13/12**

(54) **Dispositif d'assistance hydraulique.**

(30) Priorité: **31.01.84 FR 8401439**

(43) Date de publication de la demande:
**07.08.85 Bulletin 85/32**

(45) Mention de la délivrance du brevet:
**10.06.87 Bulletin 87/24**

(84) Etats contractants désignés:
**DE GB IT NL SE**

(56) Documents cité:
**DE-A-2 421 329**

(73) Titulaire: **BENDIX France, 126, rue de Stalingrad,
F-93700 Drancy (FR)**

(72) Inventeur: **Sauvée, Jean- Paul, 76, Boulevard Félix
Faure, F-93300 Aubervilliers (FR)**
Inventeur: **Riquart, Christian, 33, rue Fessart,
F-75019 Paris (FR)**
Inventeur: **Levrai, Roland, 9 bis, Avenue
Monmousseau, F-93240 Stains (FR)**

(74) Mandataire: **Timoney, Ian Charles Craig, Service
Brevets Bendix 44, rue François 1er, F-75008 Paris
(FR)**

## Description

La présente invention se rapporte aux dispositifs d'assistance hydraulique et plus particulièrement à un tel dispositif pour double circuit de freinage à fonctionnement hydrodynamique (plus communément appelé "full power") et hydrostatique.

On connait de la demande de brevet anglaise 2 051 985, conformément au préambule de la revendication 1, une commande hydraulique notamment pour un dispositif de freinage de véhicule automobile.

Ce dispositif comprend un boîtier dans lequel sont montés coulissants deux pistons reliés ensemble par une liaison hydraulique hydrostatique de façon que lorsque qu'une force est appliquée sur un des pistons par la pédale de freinage, ledit piston se déplace et provoque le déplacement du deuxième piston. Chaque piston forme une valve à tiroir qui fait partie d'un circuit hydraulique respectif qui comprend une source de fluide sous pression et les freins du véhicule. Lors d'une application de la pédale de freinage, les pistons se déplacent et ouvrent les circuits de freinage. Le système ainsi décrit présente des désavantages en ce qu'une défaillance d'une source de fluide sous pression provoque une panne de freinage du circuit respectif; le commande hydraulique n'étant pas capable de fonctionner comme maître-cylindre normal (hydrostatiquement).

Une solution aux inconvénients du dispositif décrit ci-dessus est proposée dans la demande de brevet francais 8317892 (FR-A-2 554 875) au nom ce la demanderesse. Cette demande décrit · un amplificateur hydraulique qui est relié à un maître-cylindre conventionnel et qui peut former une soupape dans un circuit de freinage haute pression, qui, en cas de défaillance, peut agir comme un maître-cylindre hydrostatique. Malgré ses avantages évidents ce système présente tout de même de légers inconvénients parce qu'un tel amplificateur ne peut servir que pour un seul circuit de freinage; un circuit double nécessitant deux amplificateurs similaires parallèles.

L'invention a donc pour objet de proposer un dispositif d'assistance hydraulique pour circuit double de freinage susceptible de fonctionner comme un maître-cylindre tandem normal en cas de panne du circuit haute pression qui est de construction simple, de faibles coûts de fabrication et de fiabilité accrue.

Pour ce faire l'invention concerne un dispositif d'assistance hydraulique comprenant un boîtier renfermant un premier et un deuxième éléments disposés en ligne et coulissants dans un alésage du boîtier, le premier élément étant déplaçable sous l'effet du déplacement d'une tige de poussée et le deuxième élément étant déplaçable par l'intermédiaire d'une liaison hydrostatique, à chaque élément étant associé un moyen de valve dans un circuit hydraulique respectif entre une source de fluide sous pression et un circuit defreinage respectif, caractérisé en ce que le premier et le deuxième renferment chacun un ensemble de clapet commandé chacun par un poussoir, le poussoir du premier ensemble de clapet étant actionné par la tige de poussée et le poussoir du deuxième ensemble de clapet étant actionné par la liaison hydrostatique entre les deux éléments.

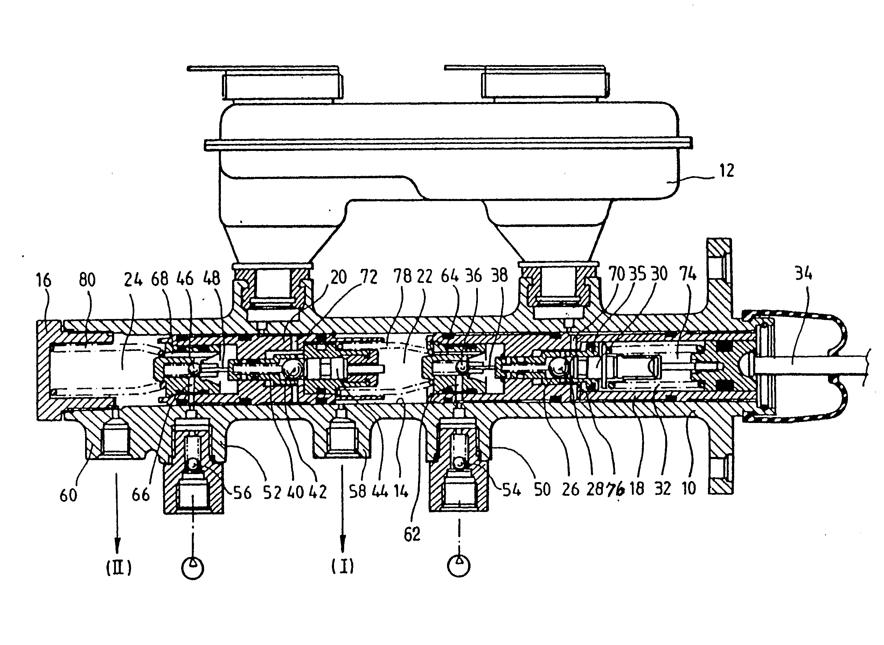

D'autres caractéristiques et avantages de la présente invention ressortiront de la description suivante d'un mode de réalisation donné à titre illustratif, mais nullement limitatif, faite en relation avec le dessin annexé, sur lequel:

- la figure unique est une vue en coupe longitudinale d'un dispositif d'assistance hydraulique selon l'invention.

Le dispositif d'assistance hydraulique comprend un boîtier 10 sur lequel est monté un réservoir double 12 de fluide hydraulique. Le boîtier 10 comprend,dans l'exemple représenté, un alésage unique 14 fermé à une extrémité par un élément de fermeture 16. Dans l'alésage 14 sont montées coulissantes une première et une deuxième douilles 18, 20 respectivement qui définissent entre elles une première chambre de pression 22. Une deuxième chambre de pression 24 est définie entre la deuxième douille 20 et l'élément de fermeture 16. La première douille 18 · comporte un premier piston 26 qui, lui-même, comporte un clapet à bille anti-retour 28 susceptible d'être déplacé par un élément de commande 30 monté coulissant dans le premier piston 26. Le premier piston 26 comporte, en plus, un clapet annulaire 35. L'élément de commande 30 est relié par un ressort de sensation pédale 32 à une tige de poussée 34 qui est reliée à la pédale de freinage du véhicule (non représentée). La première douille 18 comprend, en plus, un clapet de commande à bille 36 qui est susceptible d'être déplacé par l'intermédiaire d'une tige 58 sous l'effet du déplacement du premier piston 26.

De la même façon que pour la première douille 18, la deuxième douille 20 comporte un deuxième piston 40 muni d'un clapet à bille anti-retour 42 qui est susceptible d'être déplacé par un élément de commande 44 monté coulissant dans le deuxième piston 40. De même, la deuxième douille comporte, en outre, un clapet de commande 46 susceptible d'être déplacé par l'intermédiaire d'une tige 48 sous l'effet du deuxième piston 40.

Le boîtier 10 comprend deux bossages d'arrivée 50,52 comportant chacun un clapet à bille anti-retour 54, et 56, respectivement, et destinés à être reliés à une source de haute pression de fluide hydraulique respective. Le boîtier 10 est également pourvu de deux bossages de sortie 58, 60 chacun relié à un circuit de freinage respectif (I) et (II).

La mise en oeuvre du dispositif ainsi décrit cet la suivante. Un effort, appliqué par la pédale de freinige sur la tige de poussée 34 est transmis par l'intermédiaire du ressort 32 sur l'élément de commande 30 qui se déplace vers la gauche en regardant le dessin et ferme le clapet à bille 28. Le premier piston 26 se déplace alors par rapport à la douille 18 et ouvre le clipet de commande 36 par l'intermédiaire de la tige 38. L'ouverture du clapet de commande 36 permet au fluide sous pression de passer de l'arrivée 50 par un conduit 62 et un alésage 64 dans la cage du clapet 36 jusqu'à la première chambre de pression 22 et la sortie 58. La montée en pression du circuit primaire provoque le recul du premier piston 26 qui se trouve en équilibre avec le ressort sensation pédale 32. La montée in pression dans la première chambre de pression 22 entraîne également le déplacement de l'élément de commande 44 et, ainsi, la fermeture du clapet à bille 42 et le déplacement du deuxième piston 40 vers la gauche. Ce déplacement du deuxième piston 40 par rapport à la douille 20 provoque l'ouverture du clapet de commande 46 par l'intermédiaire de la tige 48. L'ouverture du clapet de commande 46 permet au fluide sous pression de passer de l'arrivée 52 par un conduit 66 et un alésage 68 formé dans la cage du clapet 46 jusqu'à la deuxième chambre de pression 24 où la pression de fluide montera jusqu'à l'équilibre des pressions entre le circuit primaire (I) et le circuit secondaire (II). Après relâchement de la pédale de freinage, l'échappement des deux circuits se fait par la récouverture des deux clapets à bille 28 et 42 qui permet au fluide hydraulique de passer par des conduits 70 et 72 vers le réservoir.

Le fonctionnement du dispositif en cas de défaillances possibles des circuits hydrauliques sera maintenant étudié.

1) En cas de défaillance des sources de fluide sous pression pour les deux circuits, lors de l'actionnement de la pédale de freinage le déplacement de la tige de poussée 34 entraîne la fermeture du clapet à bille 28 et l'ouverture du clapet de commande 36. La source de fluide sous pression n'existant plus, le premier piston 26 se déplace vers la gauche au-delà de la position d'équilibre du clapet de commande 36 jusqu'à la fermeture de la chambre 74 par le clapet annulaire 35 qui vient en butée contre une surface annulaire 76 de la première douille 18. La chambre 74 étant fermée, la tige de poussée 34 se heurte à un mur hydraulique qui empêche la compression du ressort de sensation pédale 32 et entraîne en translation la douille 18. Le circuit primaire (I), isolé de son réservoir et de sa source de fluide sous pression par la fermeture du clapet à bille 54, monte en pression. La montée en pression du circuit primaire entraîne la fermeture du clapet à bille 42, l'ouverture du clapet de commande 46 et le déplacement du deuxième piston 40 jusqu'à la venue en butée contre la douille 20. Ensuite la douille 20 se déplace vers la gauche et, le clipet à bille 56 étant fermé, le circuit secondaire (II) monte en pression. Après le relâchement de la pédale de freinage, deux ressorts 78 et 80 ramènent les douilles 18 et 20.

2) La défaillance de la source de fluide sous pression du circuit primaire entraîne, lors d'une application de freinage, la fermeture des clapets 28 et 54. L'ouverture du clapet de commande 36 et la fermeture du clapet annulaire 35 contre la surface 76. Ainsi le circuit primaire (I) monte en pression par le déplacement de la douille 18. Cette montée en pression du circuit primaire entraîne l'opération normale du circuit secondaire (II). La pression de freinage est identique dans les deux circuits mais inférieure à la pression normale en fonctionnement hydrodynamique.

3) En cas de défaillance de la source de fluide sous pression du circuit secondaire, le circuit primaire fonctionne normalement avec le ressort de sensation pédale 32. Le circuit secondaire défaillant monte en pression sous l'effet du déplacement de la douille 20 après la fermeture des clapets 42 et 56 et l'ouverture du clapet de commande 46. La pression de freinage dans les deux circuits est identique et équivalente à celle en fonctionnement normal.

4) En cas de défaillance du circuit de freinage primaire (I) le premier piston 26 se déplace jusqu'à la fermeture du clapet annulaire 35 contre la surface 76. Ensuite la douille 18 se déplace jusqu'à ce qu'elle vienne en butée sur l'élément de commande 44 qui pilote la pression du circuit secondaire seul opérant. Le ressort de sensation pédale 32 est neutralisé par la fermeture du clapet annulaire 35.

5) En cas de défaillance du circuit de freinage secondaire (II) le circuit primaire (seul opérant) fonctionne normalement. La pression dans la chambre secondaire 24 étant nulle, la douille 20 se déplace jusqu'à ce qu'elle vienne en butée sur l'élément de fermeture 16.

**Revendications**

1. Dispositif d'assistance hydraulique comprenant un boîtier (10) renfermant un premier et un deuxième éléments (18, 20) disposés en ligne, et coulissants dans un alésage (14) du boîtier (10), le premier élément (18) étant déplaçable sous l'effet du déplacement d'une tige de poussée (34) et le deuxième élément étant déplaçable par l'intermédiaire d'une liaison hydrostatique, à chaque élément (18, 20) étant associé un moyen de valve (36, 46) dans un circuit hydraulique respectif entre une source de fluide sous pression et un circuit de freinage (I, II) respectif, caractérisé en ce que le premier et le deuxième élément (18, 20) renferment chacun un ensemble de clapet (26, 36; 40, 46) commandé chacun par un poussoir (30, 44), le poussoir (30) du premier ensemble de clapet (26; 36) étant actionné par la tige de poussée (34) et le poussoir (44) du deuxième ensemble de clapet (40, 46) étant actionné par la liaison hydrostatique entre les deux éléments (18, 20).

2. Dispositif selon la revendication 1, caractérisé en ce que chaque élément (18, 20) limite une chambre de pression (22, 24) respective reliée à un circuit de freinage respectif (I, II).

3. Dispositif selon la revendication 2, caractérisé en ce que le premier ensemble de clapet (26, 36) comprend une bille d'isolement (28) disposée dans un piston creux (26) montée à coulissement dans le premier élément (18) et susceptible d'être actionnée par le poussoir (30) correspondant monté à coulissement dans le piston creux (26) et couplé mécaniquement à la tige de poussée (34).

4. Dispositif selon la revendication 3, caractérisé en ce qu'il comprend une troisième chambre (74) dans le premier élément (18), limitée d'un côté par la tige de poussée (34) et d'un autre côté par un clapet annulaire (35) monté sur le piston (26).

5. Dispositif selon une des revendications 1 à 4, caractérisé en ce qu'il comprend un réservoir (12) de fluide, chaque chambre de pression (22, 24) étant en communication hydraulique avec le réservoir en position de repos du dispositif.

## Patentansprüche

1. Hydraulische Servovorrichtung mit einem Gehäuse (10), das ein erstes und ein zweites Bauteil (18, 20) umschließt, die auf einer Linie angeordnet sind und in einer Bohrung (14) des Gehäuses (10) gleiten, wobei das erste Bauteil (18) unter der Wirkung einer Verschiebung einer Schubstange (34) verschiebbar ist und das zweite Bauteil über eine hydrostatische Verbindung verschiebbar ist, wobei jedem Bauteil (18, 20) ein Ventilteil (36, 46) in einem entsprechenden Hydraulikkreis zwischen einer Druckmittelquelle und einem entsprechenden Bremskreis (I, II) zugeordnet ist, dadurch gekennzeichnet, daß das erste und zweite Bauteil (18, 20) jeweils eine Ventilanordnung (26, 36; 40, 46) umschließen, die jeweils durch einen Stößel (30, 44) betätigt wird, wobei der Stößel (30) der ersten Ventilanordnung (26; 36) durch die Schubstange (34) und der Stößel (44) der zweiten Ventilanordnung (40, 46) durch die hydrostatische Verbindung zwischen den beiden Bauteilen (18, 20) betätigt wird.

2. Vorrichtung nach Anspruch 1, dadurch gekennzeichnet, daß jedes Bauteil (18, 20) eine entsprechende Druckkammer (22, 24) begrenzt, die mit einem entsprechenden Bremskreis (I, II) verbunden ist.

3. Vorrichtung nach Anspruch 2, dadurch gekennzeichnet, daß die erste Ventilanordnung (26, 36) eine Ventilkugel (28) aufweist, die in einem hohlen Kolben (26) angeordnet ist, in dem ersten Bauteil (18) gleitend gelagert ist und durch den entsprechenden Stößel (30) betätigbar ist, welcher in dem hohlen Kolben (26) gleitend gelagert und mit der Schubstange (34) mechanisch verbunden ist.

4. Vorrichtung nach Anspruch 3, dadurch gekennzeichnet, daß sie eine dritte Kammer (74) in dem ersten Bauteil (18) aufweist, die auf einer Seite von der Schubstange (34) und auf einer anderen Seite von einem am Kolben (26) angebrachten Ringventil (35) begrenzt wird.

5. Vorrichtung nach einem der Ansprüche 1 bis 4, dadurch gekennzeichnet, daß sie ein Strömungsmittelreservoir (12) aufweist, wobei jede Druckkammer (22, 24) mit dem Reservoir in der Ruhestellung der Vorrichtung hydraulisch verbunden ist.

## Claims

1. Hydraulic servo device comprising a casing (10) enclosing first and second elements (18, 20) disposed in line and sliding in a bore (14) of the casing (10), the first element (18) being displaceable under the action of the displacement of a push rod (34) and the second element being displaceable via a hydrostatic connection, a valve means (36, 46) in a respective hydraulic circuit between a pressure fluid source and a respective brake circuit (I, II) being associated to each element (18, 20), characterized in that the first and second elements (18, 20) each enclose a valve assembly (26, 36; 40, 46) each controlled by a tappet (30, 44), the tappet (30) of the first valve assembly (26; 36) being actuated by the push rod (34) and the tappet (44) of the second valve assembly (40, 46) being actuated by the hydrostatic connection between the two elements (18, 20).

2. Device according to claim 1, characterized in that each element (18, 20) limits a respective pressure chamber (22, 24) connected to a respective brake circuit (I, II).

3. Device according to claim 2, characterized in that the first valve assembly (26, 36) comprises an isolating ball (28) disposed in a hollow piston (26), slidingly mounted in the first element (18) and adapted to be actuated by the corresponding tappet (30) slidingly mounted in the hollow piston (26) and mechanically coupled to the push rod.

4. Device according to claim 3, characterized in that it comprises a third chamber (74) in the first element (18), limited on one side by the push rod (34) and on another side by the an angular valve (35) mounted on the piston (26).

5. Device according to any of claims 1 to 4, characterized in that it comprises a fluid reservoir (12), each pressure chamber (22, 24) being in hydraulic communication with the reservoir in the rest position of the device.

16 80 24 68 46 48 20 72 78 22 64 36 38 70 35 30 74 34

12

60 66 56 52 40 42 58 44 14 54 50 26 28 76 18 32 10 62

(II) (I)

0 151 069